# EUROPEAN PATENT APPLICATION

(11) **EP 3 018 180 A1**
(43) Date of publication of application: **11.05.2016**
(21) Application number: 14819741.1
(22) Date of filing: 26.06.2014
(51) Int. Cl.: C09D 133/00, E04B 1/88, B27K 7/00

(54) **THERMALLY AND ACOUSTICALLY INSULATING SPRAY CLADDING**

(30) Priority: 04.07.2013 ES 201331006
(71) Applicant: Industrias Kolmer, S.A., 18220 Albolote (Granada) (ES)
(72) Inventor: RUIZ VICO, Joaquin, E-18220 Albolote (Granada) (ES)
(74) Representative: Munoz Garcia, Antonio
(86) International application number: PCT/ES2014/070528
(87) International publication number: WO 2015/001154

(57) **Abstract**

The present invention relates to a sprayable, thermal and acoustic insulating surfacing based on cork and applicable on façades and walls or ceilings, both indoors and outdoors, consisting of a binding aqueous dispersion comprising:

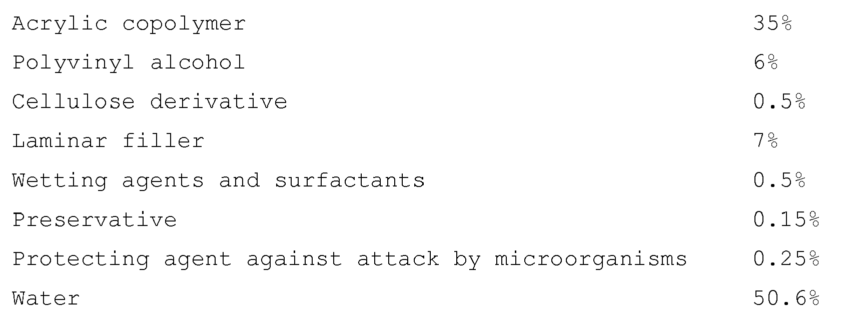

and furthermore containing from 7 to 10% of natural cork particles.

## Description

### Object of the Invention

As expressed in the title of the present specification, the invention relates to a sprayable, thermal and acoustic insulating surfacing, which contributes to the function for which it is intended several novelty features and advantages that will be described in detail below and which entail an improved alternative to the systems known today for the same purpose.

More particularly, the object of the invention focuses on a sprayable surfacing based on cork which consists of an aqueous product containing natural cork particles and developed for being used as surfacing for façades and walls, both indoors and outdoors, with the advantage of having a dual use: as a protective and thermal and acoustic insulating element, and as a decorative element.

### Field of Application of the Invention

The field of application of the present invention is comprised within the construction sector, focusing on the field of indoor and outdoor surfacings, particularly including sprayed surfacing products or materials.

### Background of the Invention

In relation to the current state of the art, it should be mentioned that although different types of materials and products for being used as surfacing are known, including some which are applied by means of a spraying method, thus far the applicant is unaware of any such product having technical, structural or constitutive features similar to those of the surfacing based on cork herein proposed and claimed.

### Disclosure of the Invention

The sprayable, thermal and acoustic insulating surfacing proposed by the present invention is configured as a remarkable novelty in its field of application, the characterizing details distinguishing same being suitably described in the final claims attached hereto.

Specifically, as previously mentioned, the invention proposes an aqueous product incorporating natural cork particles and it is particularly developed for being applied with spraying equipment as a surfacing in the construction sector, especially for façades and walls or ceilings, leaving a layer with the desired thickness, which is possible as a result of having high adherence, elasticity and durability, in addition to being an excellent thermal and acoustic insulation.

That is due, in an innovative manner, to the fact that the base for the surfacing consists of a special aqueous dispersion, formed by several elements based on copolymers acrylics and other components which provide it with special adherence, resistance, elasticity, and impermeability properties, and when mixed with natural cork particles, provide it with insulating properties entailing considerable energy savings.

This sprayable surfacing based on cork furthermore includes in its composition a protecting agent for protecting the dry film against attack by microorganisms such as algae, fungi, etc.

Specifically, the special aqueous dispersion used as a base or binder with respect to the sprayable cork surfacing, consists of the following elements in the indicated proportions:

| | |
|---|---|
| Acrylic copolymer | 35% |
| Polyvinyl alcohol | 6% |
| Cellulose derivative | 0.5% |
| Laminar filler | 7% |
| Wetting agents and surfactants | 0.5% |
| Preservative | 0.15% |
| Biocidal substance protecting against attack by microorganisms | 0.25% |
| Water | 50.6% |

From 7 to 10% of natural cork particles which can have a larger or smaller size, as desired, are added to this dispersion.

The sprayed cork surfacing therefore has the following properties:
Specific weight: 0.91 g/cc
Solid content: 45%
Dried to the touch: 1 - 2 hours
Completely dried, depending on support and moisture: 8 - 24 hours
Minimum/maximum application temperature: +7°C/+30°C
Maximum VOC (volatile organic compounds) content: 19 g/l Non-toxic product

### Asphalt product-free

Therefore it is an advantageous product as a surfacing because it has a dual use:
As protection: In addition to the barrier effect that any paint has against external inclemency, as it contains cork particles, it has the characteristics of this material, and it is therefore also thermal and acoustic insulation, also acting as a waterproofing layer.

As decoration: The warmth and feel of natural cork provides a characteristic finish offering the possibility of multiple colors that are both natural and with water-based dyes and all being lightfast.

Furthermore, the surfacing can be applied on virtually any surface, on walls, ceilings and floors of any type.

Due to its properties, the product can be used indoors and outdoors, in homes, garages, businesses, industrial warehouses, etc.

Its most common uses are:
- Water-proofing for roofs and façades
- Thermal and acoustic insulation
- Sealant and adhesive
- Anti-moisture
- Anti-niter
- Asbestos encapsulation

The sprayable cork surfacing is applied easily with spraying equipment, with a pressure between 3.5 and 4 atm. Each spray leaves a layer at least 3 mm thick. A double layer is recommended in roofs, using spray guns, rollers or other techniques.

The proposed cork surfacing can advantageously replace a large number of insulation materials and systems, further adding elasticity, flexibility and mechanical resistance, thermal and acoustic insulation, impermeability and protection of the dry film against attack by microorganisms.

The energy savings are estimated to be about 30-40%, accompanied by significant manual labor and material savings in comparison to conventional products and full compliance with the new European building regulations.

The described sprayable, thermal and acoustic insulating surfacing is therefore an innovation comprising constitutive technical features unknown up until now, and for these reasons combined with its practical usefulness, the proposed invention is provided with sufficient grounds to be granted the exclusive privilege sought.

## Claims

1. A sprayable, thermal and acoustic insulating surfacing particularly based on cork and applicable for being used as a sprayed surfacing for façades and walls or ceilings, both indoors and outdoors, **characterized in that** it consists of a binding aqueous dispersion containing natural cork particles, and comprising:
Acrylic copolymer
Polyvinyl alcohol
Cellulose derivative
Laminar filler
Wetting agents and surfactants
Preservative
0.25% protecting agent against attack by microorganisms Water

2. The sprayable, thermal and acoustic insulating surfacing according to claim 1, **characterized in that** in addition to the cork particles, the binding aqueous dispersion consists of:
| | |
|---|---|
| Acrylic copolymer | 35% |
| Polyvinyl alcohol | 6% |
| Cellulose derivative | 0.5% |
| Laminar filler | 7% |
| Wetting agents and surfactants | 0.5% |
| Preservative | 0.15% |
| Protecting agent against attack by microorganisms | 0.25% |
| Water | 50.6% |

3. The sprayable, thermal and acoustic insulating surfacing according to any of claims 1 or 2, **characterized in that** the binding aqueous dispersion incorporates more than 7% of natural cork particles.

4. The sprayable, thermal and acoustic insulating surfacing according to claim 3, **characterized in that** the binding aqueous dispersion incorporates from 7 to 10% of natural cork particles.
